## Europäisches Patentamt

(19) **European Patent Office**

Office européen des brevets

(11) Veröffentlichungsnummer: **0 103 163**
**B1**

(12) # EUROPÄISCHE PATENTSCHRIFT

(45) Veröffentlichungstag der Patentschrift:
**22.04.87**

(51) Int. Cl.⁴: **H 04 J 3/06**, H 04 J 3/04

(21) Anmeldenummer: **83107871.2**

(22) Anmeldetag: **09.08.83**

(54) **Anordnung zum synchronen Demultiplexen eines Zeitmultiplexsignals.**

(30) Priorität: **12.08.82 DE 3230064**

(43) Veröffentlichungstag der Anmeldung:
**21.03.84 Patentblatt 84/12**

(45) Bekanntmachung des Hinweises auf die Patenterteilung:
**22.04.87 Patentblatt 87/17**

(84) Benannte Vertragsstaaten:
**AT CH DE FR GB IT LI SE**

(56) Entgegenhaltungen:
**EP - A - 0 040 351**
**FR - A - 2 467 516**

**IEEE 1974 INTERNATIONAL CONFERENCE ON COMMUNICATIONS, Juni 17-19 1974 Hotel Leamington, MINNEAPOLIS, MINNESOTA, NEW YORK (US) Seite 39D-1-Seite 39D-5. HANKE: "PCM Recieving Equipment of A 640 Mbits/s Waveguide Transmission System using Integrated Circuits."**
**P. GRIVET: "PHYSIQUE DES LIGNES DE HAUTE FREQUENCE ET D'ULTRAHAUTE FREQUENCE, Seite 324-328 MASSON ET CIE., PARIS (FR) 1969 Tome 1. "Paramètres primaires et secondaires ondes progressives. Impulsions."**

(73) Patentinhaber: **Siemens Aktiengesellschaft Berlin und München, Wittelsbacherplatz 2, D-8000 München 2 (DE)**

(72) Erfinder: **Fladerer, Heinrich, Ing.-grad, Thomas-Diewald-Strasse 3, D-8033 Planegg (DE)**
Erfinder: **Mageri, Johann, Ing.-grad, Sauerbruchstrasse 9, D-8000 München 70 (DE)**

ACTORUM AG

## Beschreibung

Die Erfindung bezieht sich auf eine Anordnung zum bitweisen synchronen Demultiplexen eines Zeitmultiplexsignals in einem blockweise auftretenden Rahmenkennungswort.

Derartige Anordnungen sind aus der Zeitschrift «Telcom-Report», 2 (1979) Beiheft Digital-Übertragungstechnik, Seite 59 bis 64 für eine Bitrate bis 139 Mbit/s bekannt.

Die Serien-Parallelwandlung erfolgte bisher mittels Schieberegister derart, dass die Daten nacheinander in das Register eingeschrieben und parallel zu Zeitpunkten ausgelesen wurden, die ein ganzes Vielfaches des Eingabetaktes sind. Ein praktisch einsetzbarer Demultiplexer ist in der DE-PS 2 856 565 beschrieben. Da die Datenerkennungszeit (set-up- and hold-time) der verwendeten Speicherelemente ausreichend klein gegen die Bitlänge des zu verteilenden seriellen Zeitmultiplexsignals sein muss, sind bei einer Bitfolge von beispielsweise 565 Mbit/s sehr schnelle Flipflops mit entsprechend hoher Verlustleistung erforderlich.

Die Synchronisierung wurde, wie aus der genannten Zeitschrift entnehmbar ist, am Eingang des Demultiplexers vorgenommen. Bei einer Bitfolge des Zeitmultiplexsignals von 565 Mbit/s ergeben sich aber geschwindigkeitsbedingte Schwierigkeiten.

Aufgabe der Erfindung ist es, einen synchronen Demultiplexer anzugeben, der für hohe Bitfolge geeignet ist und die CCITT-Empfehlung nach dem Gelbbuch, Vol. III, Seiten 219 bis 220 (Fascicle III.3, Rec. G 922, Abschnitt 3.4) erfüllt. Weiter soll ein möglichst grosser Teil der Anordnung in einer integrierten Schaltung (Gate-Array) in ECL-Technologie (Emitter-Coupled-Logic) realisierbar sein.

Nach der genannten CCITT-Empfehlung darf die Kanalzuordnung erst dann geändert werden, wenn das Rahmenkennungswort viermal hintereinander nicht erkannt worden ist.

Ausgehend von einer Anordnung der einleitend geschilderten Art wird diese Aufgabe erfindungsgemäss dadurch gelöst, dass eingangsseitig eine Kettenschaltung aus n-1 Leitungselementen mit einer Signallaufzeit einer Bitlänge des Zeitmultiplexsignals vorgesehen ist, dass im anschliessenden Übertragungsweg ein erster Speicher mit n D-Flipflops, deren Eingang entweder mit dem Eingang der Kettenschaltung oder mit dem Ausgang jeweils eines Leitungselementes verbunden ist, ein zweiter Speicher, ein dritter Speicher, ein mit dem zweiten Speicher und dem dritten Speicher verbundener Kanalverteiler und ein vierter Speicher vorgesehen sind, dass im Steuerweg zwischen dem zweiten Speicher und dem Kanalverteiler ein Decodierer, ein fünfter Speicher, ein sechster Speicher und ein Codierer vorgesehen sind und dass hinter dem fünften und sechsten Speicher eine Verknüpfungsanordnung mit nachgeschaltetem Rahmenzähler vorgesehen sind, der den sechsten Speicher und die Verknüpfungsanordnung steuert.

Eine Anordnung mit einem Demultiplexer und einem nachgeschalteten Signalverteiler ist in der EP-A-101 056 beansprucht.

Ausgestaltungen der erfindungsgemässen Anordnung sind den Unteransprüchen zu entnehmen.

Anhand eines Ausführungsbeispiels wird die Erfindung nachstehend näher erläutert.

Fig. 1 zeigt einen erfindungsgemässen synchronen Demultiplexer,

Fig. 2 zeigt detailliert den Demultiplexer mit Serienparallelwandler und erstem Speicher,

Fig. 3 zeigt detailliert die weiter im Übertragungsweg liegenden Teile der Anordnung,

Fig. 4 zeigt detailliert die im Steuerweg der Kanalverteilung liegenden Teile der Anordnung,

Fig. 5 zeigt den Rahmenzähler und

Fig. 6 zeigt einen Pulsplan zur Erläuterung der Wirkungsweise der Synchronisation.

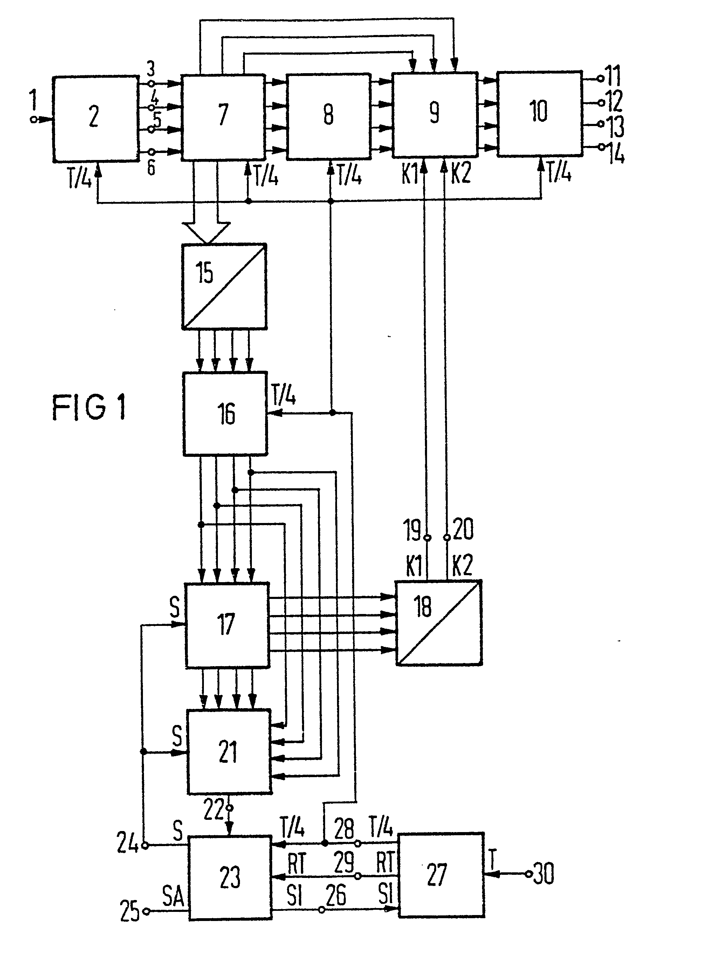

Figur 1 zeigt ein Ausführungsbeispiel des erfindungsgemässen synchronen Demultiplexer. Die Anordnung enthält einen Eingang 1, einen Demultiplexer 2 mit erstem Speicher 39, weitere Speicher 7, 8, 10, 16 und 17, einen Kanalverteiler 9, Ausgänge 11 bis 14, einen Decodierer 15, einen Codierer 18, eine Verknüpfungsanordnung 21, einen Rahmenzähler 23 und eine Taktversorgung 27 mit einem Eingang 30.

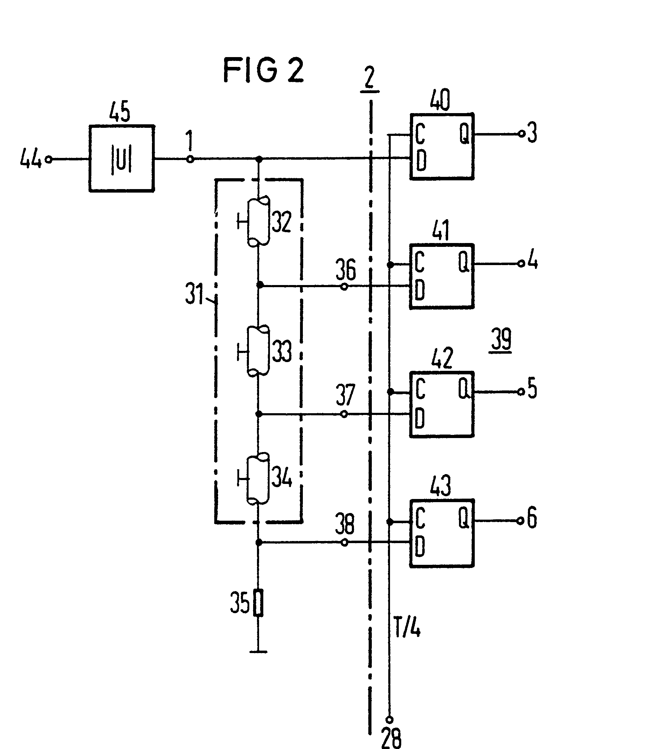

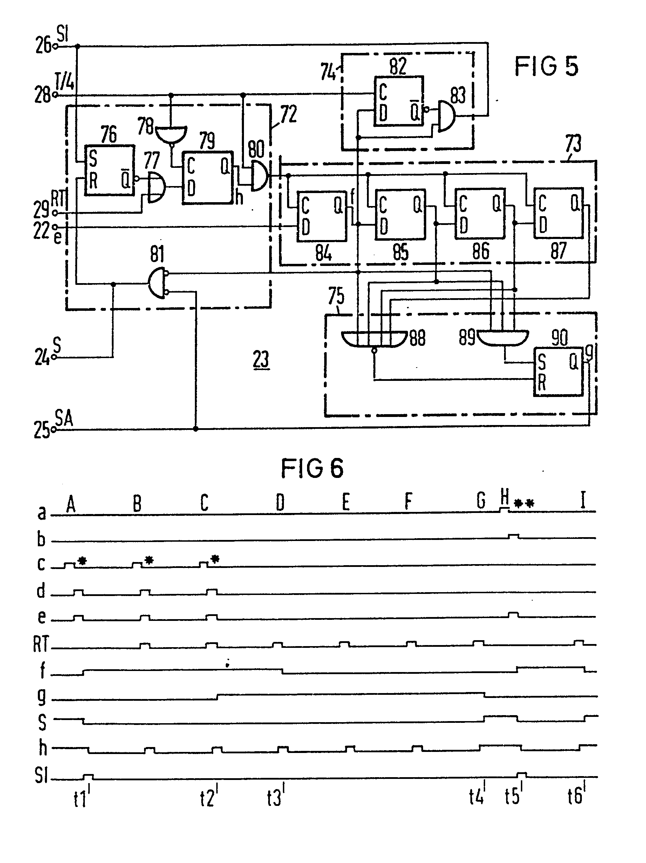

Die Wirkungsweise der Anordnung nach Figur 1 wird zusammen mit den Detailanordnungen nach den Figuren 2 bis 5 und dem Pulsplan nach Figur 6 erläutert.

Figur 2 enthält eine Kettenschaltung 31 aus Leitungselementen 32 bis 34, einen Abschlusswiderstand 35 mit dem Wert des Wellenwiderstandes der Kettenschaltung 31, einen ersten Speicher 39 mit D-Flipflops 40 bis 43 mit Ausgängen 3 bis 6 sowie einen gemeinsamen Takteingang 28. Ausserdem ist dem Eingang 1 eine Entscheiderstufe 45 mit Eingang 44 vorgeschaltet.

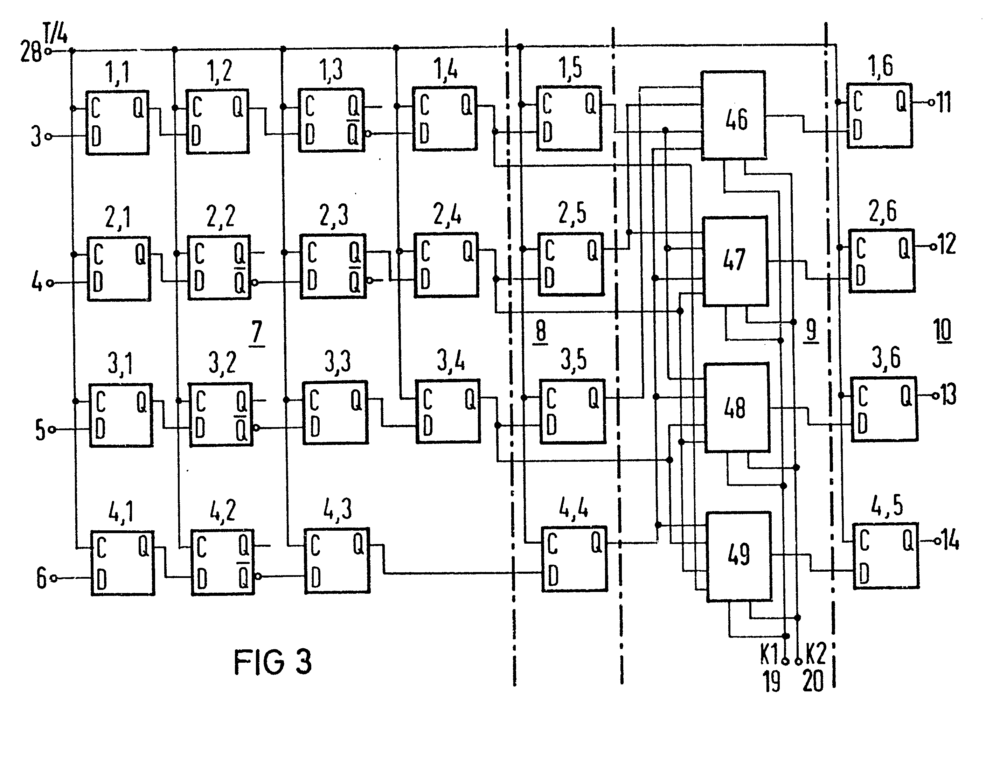

Figur 3 zeigt den anschliessenden Übertragungsweg zwischen den Eingängen 3 bis 6 und den Ausgängen 11 bis 14 mit den Speichern 7, 8 und 10 und mit dem Kanalverteiler 9. Mit Bezugszeichen, die aus zwei durch einen Punkt verbundenen Ziffern bestehen, sind D-Flipflops bezeichnet. Die erste Ziffer bezeichnet den Kanal, die zweite Ziffer die Position des D-Flipflops in Übertragungsrichtung. Mit 46 bis 49 sind Multiplexer bezeichnet, die Steuereingänge 19 und 20 aufweisen.

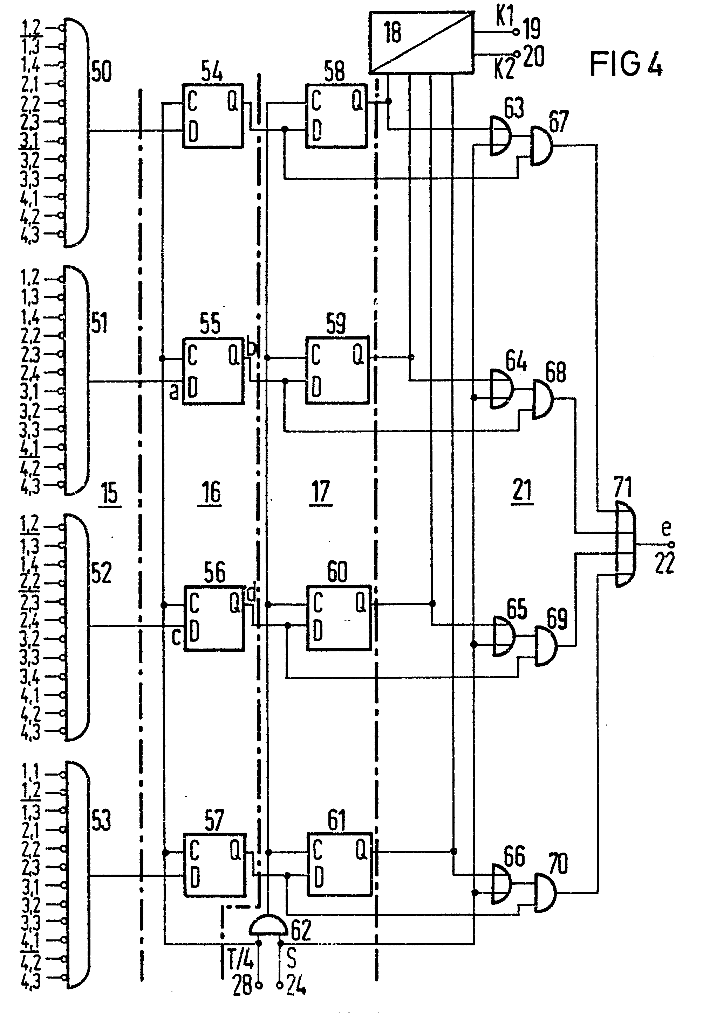

Figur 4 zeigt detailliert den Decodierer 15, die Speicher 16 und 17 und die Verknüpfungsanordnung 21 sowie den Codierer 18.

Der Decodierer 15 besteht aus vier UND-Gattern 50 bis 53, deren Eingänge mit Q- oder Q̄-Ausgängen von D-Flipflops nach Figur 3 entsprechend der Bezeichnung verbunden sind. Ein Querstrich über der D-Flipflop-Bezeichnung bedeutet eine Abnahme am invertierten Ausgang Q̄.

Die Speicher 16 und 17 bestehen jeweils aus vier D-Flipflops (54 bis 57; 58 bis 61). Die Takt-ein-

gänge der D-Flipflops (54 bis 57) im Speicher 16 sind mit einem Taktanschluss 28, die Takteingänge der D-Flipflops (58 bis 61) im Speicher 17 sind mit dem Ausgang eines UND-Gatters 62 verbunden. Ein Eingang dieses UND-Gatters 62 ist mit dem Takteingang 28 und der andere Eingang ist mit dem Steuersignaleingang 24 verbunden.

Die Verknüpfungsanordnung 21 enthält ODER-Gatter 63 bis 66 und 71, UND-Gatter 67 bis 70 und einen Ausgang 22.

Die Figur 5 zeigt den Rahmenzähler 23 mit einer Ansteueranordnung 72, einem Schieberegister 73, einer Setzimpulsanordnung 74 und einer Überwachungsanordnung 75.

Die Ansteueranordnung 72 enthält ein RS-Flipflop 76, ein ODER-Gatter 77, einen Inverter 78, ein D-Flipflop 79, ein UND-Gatter 80 und ein UND-Gatter 81 mit invertierenden Eingängen. Die Setzimpulsanordnung 74 besteht aus einem D-Flipflop 82 und einem UND-Gatter 83. Das Schieberegister 73 enthält vier D-Flipflops 84 bis 87. Die Überwachungsanordnung 75 besteht aus einem NOR-Gatter 88, einem UND-Gatter 89 und einem RS-Flipflop 90 mit einem Ausgang 25 für eine Synchronisationsanzeige SA.

Wird an den Eingang 44 in Figur 2 ein AMI-codiertes (Alternate-Mark-Inversion) Zeitmultiplexsignal angelegt, so wird dieses in der Entscheiderstufe 45 in ein binäres Zeitmultiplexsignal umgesetzt. Dieses läuft über den Eingang 1 in den Figuren 1 und 2 in den Demultiplexer 2. Wie Figur 2 zeigt, läuft das Zeitmultiplexsignal dort in die Kettenschaltung 31. Die einzelnen Leitungselemente 32 bis 34 weisen eine Signallaufzeit auf, die einer Bitlänge des Zeitmultiplexsignals am Eingang 1 entspricht. Beispielsweise bei einer Bitfolge von 565 Mbit/s sind Leitungselemente in Form von Kabeln etwa 40 cm lang. Streifenleitungen auf einem Träger mit hohem Verkürzungsfaktor können eine erheblich geringere Länge aufweisen.

An den Eingang 28 wird der durch vier geteilte Takt T des Zeitmultiplexsignals am Eingang 1 angelegt. Mit diesem Takt T/4 übernehmen die vier D-Flipflops 40 bis 43 die Signale an den Aussenanschlüssen 1 und 38 sowie an den Abgriffen 36 und 37 der Kettenschaltung 31 und geben sie an die Ausgänge 3 bis 6 weiter.

Figur 3 zeigt den weiteren Übertragungsweg. Der Speicher 7 enthält im ersten Kanal vier D-Flipflops 1.1 bis 1.4, im zweiten Kanal vier D-Flipflops 2.1 bis 2.4, im dritten Kanal vier D-Flipflops 3.1 bis 3.4 und im vierten Kanal drei D-Flipflops 4.1 bis 4.3. Zur Vereinfachung des Speichers 7 wurden viele platzsparende D-Flipflops ohne invertierenden Ausgang $\bar{Q}$ verwendet. Damit ein einfacher Decodierer 15 verwendet werden kann, werden die Daten nach den D-Flipflops 1.3, 2.2, 3.2 und 4.2 invertiert weitergeschoben. Somit benötigen lediglich diese D-Flipflops und das D-Flipflop 2.3 für die Decodierung einen invertierenden Ausgang $\bar{Q}$ neben dem nicht invertierenden Ausgang Q. In den fünfzehn D-Flipflops des Speichers 7 kann ein zwölfstelliges Rahmenkennungswort 111110100000 in vier benachbarten überlappenden Positionen auftreten. Bei der ersten Position ist es beispielsweise in den D-Flipflops 3.4, 2.4, 1.4, 4.3, 3.3, 2.3, 1.3, 4.2, 3.2, 2.2, 1.2 und 4.1 in der Reihenfolge des Rahmenkennungswortes enthalten; in der zweiten Position liegt es zwischen den D-Flipflops 2.4 und 3.1, in der dritten Position zwischen den D-Flipflops 1.4 und 2.1 und in der vierten Position zwischen den D-Flipflops 4.3 und 1.1.

Die Ausgänge der D-Flipflops im Speicher 7 sind durch im Übertragungsweg nachfolgende D-Flipflops und die angeschlossenen UND-Gatter 50 bis 53 des Decodierers 15 in Figur 4 belastet. Eine zu grosse Belastung führt bei 140 Mbit/s oder 565 Mbit/s Übertragungsgeschwindigkeit zu unzulässigen Betriebsverhältnissen, die einen Funktionsausfall bewirken. Deshalb werden vor der Kanalverteilung die vier abgeleiteten Zeitmultiplexsignale um einen Schritt weitergeschoben, was mittels des zweiten Speichers 8 möglich ist.

Der Kanalverteiler 9 wird jetzt nur noch an die weniger belasteten D-Flipflops 1.4, 2.4, 3.4, 1.5, 2.5, 3.5 und 4.4 angeschlossen.

Im Kanalverteiler 9 erfassen je nach dem an den Steuereingängen 19 und 20 anliegenden Codewort die vier Multiplexer 46 bis 49 die synchrone der vier Positionen und schalten diese über den Speicher 10 auf die Ausgänge 11 bis 14 durch. Die Zwischenspeicherung ist wegen der hohen Bitrate notwendig. Die D-Flipflops 1.6, 2.6, 3.6 und 4.5 geben die Datensignale – bedingt durch den Aufbau des Speichers 7 – invertiert ab.

Im Decodierer 15 nach Figur 4 erfasst eines der UND-Gatter 50 bis 53 das Rahmenkennungswort und gibt ein Signal an ein nachgeschaltetes D-Flipflop im Speicher 16 ab. Dieses wird über das nachgeschaltete D-Flipflop im Speicher 17 an den Codierer 18 und die Verknüpfungsanordnung 21 dann weitergegeben, wenn am Eingang 24 ein Steuersignal S vom Rahmenzähler 23 anliegt. Dies ist der Fall, wenn die Anordnung nicht synchron arbeitet und im D-Flipflop 84 im Schieberegister 73 die Information «kein Rahmenkennungswort erkannt» gespeichert ist. Der Codierer 18 setzt die ihm angebotenen Signale in einen Code K1, K2 für die Steuerung des Kanalverteilers 9 um.

Im nichtsynchronen Zustand schaltet die Verknüpfungsanordnung 21 alle Eingänge des Speichers 17 auf ihren Ausgang 22 durch. Beim ersten erkannten Rahmenkennungswort wird das entsprechende Ausgangssignal des Speichers 16 im nachfolgenden D-Flipflop des Speichers 17 gespeichert und zum Ausgang 22 weitergeleitet über den es in den Rahmenzähler 23 gelangt. Das Steuersignal S erhält jetzt den logischen Zustand «0», wodurch die Taktversorgung des Speichers 17 abgeschaltet wird und nur noch über den durchgeschalteten Kanal Impulse zum Ausgang 22 gelangen können. Der synchrone Zustand ist bei drei erkannten Rahmenkennungswörtern erreicht. Dies ändert sich erst dann, wenn das Steuersignal S den logischen Zustand «1» annimmt und alle ODER-Gatter 63 bis 66 durchschaltet.

Die Ausgangsimpulse der Verknüpfungsanordnung 21, die «Rahmenkennungswort erkannt» bedeuten, werden über den Anschluss 22 (siehe Figur 5) in das Schieberegister 73 des Rahmenzählers 23 eingespeist. Dieses Schieberegister 73 wird mit den Ausgangsimpulsen der Ansteueranordnung 72 getaktet.

Das RS-Flipflop 76 wird mit dem Setzimpuls SI der Setzimpulsanordnung 74 gesetzt. Zurückgesetzt wird es, wenn die Anordnung nicht synchron ist und das D-Flipflop 84 die Information «kein Rahmenkennungswort erkannt» gespeichert hat, wobei die Verknüpfung über das UND-Gatter 81 erfolgt. Die Freigabesignale für den Takt des Schieberegisters 73, also entweder das Ausgangssignal des RS-Flipflops 76 oder der Rahmentakt RT aus der Taktversorgung 27 werden mit dem ODER-Gatter 77 verknüpft und zum D-Flipflop 79 weitergeleitet, das über den Inverter 78 getaktet wird. Das Ausgangssignal dieses D-Flipflops 79 gibt über das UND-Gatter 80 den Takt $\frac{T}{4}$ für das Schieberegister 73.

Der Takt $\frac{T}{4}$ liegt demnach ständig am Schieberegister 73, wenn die Anordnung nicht synchron ist und im D-Flipflop 84 die Information «kein Rahmenkennungswort erkannt» gespeichert ist. Ein Taktimpuls $\frac{T}{4}$ liegt pro Rahmen an, wenn die Anordnung synchron ist oder das D-Flipflop 84 die Information «Rahmenkennungswort erkannt» gespeichert hat.

In der Überwachungsanordnung 75 speichert das RS-Flipflop 80, ob die Anordnung synchron oder nichtsynchron ist. Synchron ist sie dann, wenn drei Rahmenkennungswörter hintereinander richtig erkannt wurden. Dies ist dann der Fall, wenn das UND-Gatter 89 ein Signal abgibt. Werden hintereinander vier Rahmenkennungswörter nicht erkannt, so gibt das NOR-Gatter 88 ein Signal ab und setzt das RS-Flipflop 90 zurück, die Anordnung ist nicht synchron.

Beim ersten erkannten Rahmenkennungswort wechselt am D-Flipflop 84 das Signal vom logischen Zustand «0» zum logischen Zustand «1». Ein Bit später wechselt der Q̄-Ausgang des D-Flipflops 82 in der Setzimpulsanordnung 74 vom logischen Zustand «1» in den logischen Zustand «0». Durch die Verknüpfung dieser beiden Signale mit dem UND-Gatter 83 steht der Setzimpuls SI für die Taktversorgung 27 mit einer Breite von einem Bit zur Verfügung.

Der Pulsplan nach Figur 6 zeigt wesentliche Funktionsabläufe.

a) ist der logische Zustand am Eingang des D-Flipflops 55,

b) ist der logische Zustand am Ausgang des D-Flipflops 55,

c) ist der logische Zustand am Eingang des D-Flipflops 56,

d) ist der logische Zustand am Ausgang des D-Flipflops 56 und

e) ist der logische Zustand am Ausgang 22 des ODER-Gatters 71 und somit der Verknüpfungsanordnung 21;

f) ist weiterhin der logische Zustand am Ausgang des RS-Flipflops 84 im Schieberegister 73,

g) ist der logische Zustand am Ausgang des RS-Flipflops 90 in der Überwachungsanordnung 75 und

h) ist der logische Zustand am Ausgang des D-Flipflops 79 in der Ansteueranordnung 72.

Es bedeuten:
A) erstes erkanntes Rahmenkennungswort,
B) zweites erkanntes Rahmenkennungswort,
C) drittes erkanntes Rahmenkennungswort,
D) erstes nichterkanntes Rahmenkennungswort,
E) zweites nichterkanntes Rahmenkennungswort,
F) drittes nichterkanntes Rahmenkennungswort,
G) viertes nichterkanntes Rahmenkennungswort,
H) erstes erneut erkanntes Rahmenkennungswort,
I) zweites jetzt nichterkanntes Rahmenkennungswort.

Im Zeitraum bis t1 wird gesucht. Im Zeitraum zwischen t1 und t2 wird aufsynchronisiert, d.h. es wird dreimal hintereinander ein Rahmenkennungswort gefunden. Bis zum Zeitpunkt t2 ist die Anordnung nicht synchron. Im Zeitraum zwischen t2 und t4 ist die Anordnung synchron. Im Zeitraum zwischen t3 und t4 wird absynchronisiert, d.h. es wurde viermal hintereinander kein Rahmenkennungswort gefunden. Ab dem Zeitpunkt t4 ist die Anordnung wieder nichtsynchron. Im Zeitraum von t4 bis t5 wird gesucht, im Zeitraum von t5 bis t6 wird aufsynchronisiert und ab dem Zeitpunkt t6 wird wieder gesucht.

*) bedeutet, dass das erste Bit des Rahmenkennungswortes im dritten Kanal des Speichers 7 liegt;

**) bedeuten, dass das erste Bit des Rahmenkennungswortes im zweiten Kanal des Speichers 7 liegt. Die Rahmenlänge ist in der Darstellung stark verkürzt; die Gatterlaufzeiten wurden zur besseren Übersicht nicht berücksichtigt.

Aus dem Takt T des eingangsseitigen Zeitmultiplexsignals kann mittels eines Verstärkers, eines Phasenschiebers und eines Frequenzteilers 4:1 der Takt $\frac{T}{4}$ gewonnen werden.

## Patentansprüche

1. Anordnung zum bitweisen synchronen Demultiplexen eines Zeitmultiplexsignals mit einem blockweise auftretenden Rahmenkennungswort, dadurch gekennzeichnet, dass eingangsseitig eine Kettenschaltung (31) aus n-1 Leitungselementen (32 bis 34) mit einer Signallaufzeit einer Bitlänge des Zeitmultiplexsignals vorgesehen ist, dass im anschliessenden Übertragungsweg ein erster Speicher (39) mit n D-Flipflops (40 bis 43), deren Eingang entweder mit dem Eingang (1) der Kettenschaltung (31) oder mit dem Ausgang (36 bis 38) jeweils eines Leitungselementes (32 bis 34) verbunden ist, ein zweiter Speicher (7), ein dritter Speicher (8) ein mit dem zweiten Speicher (7) und dem dritten Speicher (8) verbundener Kanalverteiler (9) und ein vierter Speicher (10) vorgesehen sind, dass im Steuerweg zwischen dem zweiten Speicher (7) und dem Kanalverteiler (9) ein Decodierer (15), ein fünfter Speicher (16), ein sechster Speicher (17) und ein Codierer (18) vorgesehen sind und dass hinter dem fünften (16) und sechsten (17) Speicher eine Verknüpfungsanordnung (21) mit nachgeschaltetem Rahmenzähler (23) vorgesehen sind, der den sechsten Speicher (17) und die Verknüpfungsanordnung (21) steuert (Fig. 1 und 2).

2. Anordnung nach Anspruch 1, dadurch gekennzeichnet, dass Leitungselemente (32 bis 34) mit einem Wellenwiderstand von 50 Ω, 60 Ω oder 75 Ω vorgesehen sind.

3. Anordnung nach Anspruch 1 oder 2, dadurch gekennzeichnet, dass als Leitungselemente (32 bis 34) Kabelstücke vorgesehen sind (Figur 2).

4. Anordnung nach einem der Ansprüche 1 bis 3 für vier abgehende Kanäle zur Synchronisierung auf ein zwölfstelliges blockweises Rahmenkennungswort, dadurch gekennzeichnet, dass im zweiten Speicher (7) im ersten Kanal vier D-Flipflops (1.1 bis 1.4), im zweiten Kanal vier D-Flipflops (2.1 bis 2.4), im dritten Kanal vier D-Flipflops (3.1 bis 3.4) sowie im vierten Kanal drei D-Flipflops (4.1 bis 4.3) in Kette geschaltet sind, wobei im ersten Kanal beim dritten D-Flipflop (1.3) und im zweiten, dritten und vierten Kanal beim zweiten D-Flipflop (2.2, 3.2, 4.2) der Q̄-Ausgang verwendet wird, während bei den restlichen D-Flipflops der Q-Ausgang angeschlossen ist (Fig. 3).

5. Anordnung nach Anspruch 4, dadurch gekennzeichnet, dass im dritten (8) und vierten (10) Speicher nur D-Flipflops (1.5, 2.5, 3.5, 4.5; 1.6, 2.6, 3.6, 4.6) mit lediglich einem Q-Ausgang vorgesehen sind und dass die Takteingänge (C) aller dieser D-Flipflops miteinander verbunden sind (Fig. 3).

6. Anordnung nach Anspruch 4, dadurch gekennzeichnet, dass im Kanalverteiler (9) vier Multiplexer (46 bis 49) mit je zwei Eingängen (19, 20) für ein Steuercodewort (K1, K2) vorgesehen sind, dass beim ersten Multiplexer (46) der erste Eingang mit dem Q-Ausgang des D-Flipflops (3.5) im dritten Kanal, der zweite Eingang mit dem Q-Ausgang des D-Flipflops (2.5) im zweiten Kanal, der dritte Eingang mit dem Ausgang des D-Flipflops (1.5) im ersten Kanal und der vierte Eingang mit dem Q-Ausgang des D-Flipflops (4.4) im vierten Kanal des dritten Speichers (8) verbunden ist, dass beim zweiten Multiplexer (47) der erste Eingang mit dem Q-Ausgang des D-Flipflops (2.5) im zweiten Kanal, der zweite Eingang mit dem Q-Ausgang des D-Flipflops (1.5) im ersten Kanal und der dritte Eingang mit dem Q-Ausgang des D-Flipflops (4.4) im vierten Kanal des dritten Speichers (8) und der vierte Eingang mit dem Q-Ausgang des letzten D-Flipflops (2.4) im zweiten Kanal des zweiten Speichers (7) verbunden ist, dass beim dritten Multiplexer (48) der erste Eingang mit dem Q-Ausgang des D-Flipflops (1.5) im ersten Kanal und der zweite Eingang mit dem Q-Ausgang des letzten D-Flipflops (4.4) im vierten Kanal des dritten Speichers (8) und der dritte Eingang mit dem Q-Ausgang des letzten D-Flipflops (3.4) im dritten Kanal und der vierte Eingang mit dem Q-Ausgang des letzten D-Flipflops (2.4) im zweiten Kanal des zweiten Speichers (7) verbunden ist und dass beim vierten Multiplexer (49) der erste Eingang mit dem Q-Ausgang des D-Flipflops (4.4) im vierten Kanal des dritten Speichers (8), der zweite Eingang mit dem Ausgang des letzten D-Flipflops (3.4) im dritten Kanal, der dritte Eingang mit dem Q-Ausgang des letzten D-Flipflops (2.4) im zweiten Kanal und der vierte Eingang mit dem Q-Ausgang des letzten D-Flipflops (1.4) im ersten Kanal des zweiten Speichers (7) verbunden ist (Fig. 3).

7. Anordnung nach Anspruch 4, dadurch gekennzeichnet, dass im Decodierer (15) vier UND-Gatter (50 bis 53) mit invertierenden Eingängen vorgesehen sind, dass die Eingänge des ersten UND-Gatters (50) mit den Ausgängen des zweiten (1.2), des dritten (1.3) und des vierten (1.4) D-Flipflops im ersten Kanal und mit den Ausgängen des ersten (2.1, 3.1, 4.1), des zweiten (2.2, 3.2, 4.2) und des dritten (2.3, 3.3, 4.3) D-Flipflops im zweiten, dritten und vierten Kanal des zweiten Speichers (7) verbunden sind, wobei beim dritten D-Flipflop (1.3) im ersten Kanal und beim zweiten D-Flipflop (3.2) im dritten Kanal der Q̄-Ausgang und bei den restlichen D-Flipflops der Q-Ausgang benutzt wird, dass die Eingänge des zweiten UND-Gatters (51) mit den Ausgängen des zweiten (1.2, 2.2) des dritten (1.3, 2.3) und des vierten (1.4, 2.4) des zweiten und dritten Kanals und mit den Ausgängen des ersten (3.1, 4.1), zweiten (3.2, 4.2) und dritten (3.3, 4.3) D-Flipflops im dritten und vierten Kanal verbunden sind, wobei beim zweiten D-Flipflop (4.2) im vierten Kanal der Q̄-Ausgang und bei den restlichen D-Flipflops der Q-Ausgang benützt wird, dass die Eingänge des dritten UND-Gatters (52) mit den Ausgängen des zweiten (1.2, 2.2, 3.2), dritten (1.3, 2.3, 3.3) und vierten (1.4, 2.4, 3.4) D-Flipflops im ersten, zweiten und dritten Kanal und mit den Ausgängen des ersten (4.1), zweiten (4.2) und dritten (4.3) D-Flipflops im vierten Kanal des zweiten Speichers (7) verbunden sind, wobei beim dritten D-Flipflop (1.3, 2.3) im ersten und zweiten Kanal der Q̄-Ausgang und bei dem restlichen D-Flipflops der Q-Ausgang benutzt wird und dass die Eingänge des vierten UND-Gatters (53) mit den Ausgängen des ersten (1.1, 2.1, 3.1, 4.1), zweiten (1.2, 2.2, 3.2, 3.2, 4.2) und dritten (1.3, 2.3, 3.3, 4.3) D-Flipflops im ersten, zweiten, dritten und vierten Kanal des zweiten Speichers (7) verbunden sind, wobei beim dritten D-Flipflop (1.3) im ersten Kanal und beim zweiten D-Flipflop (4.2) im vierten Kanal der Q̄-Ausgang und bei den restlichen D-Flipflops im Q-Ausgang benötigt wird (Fig. 4).

8. Anordnung nach Anspruch 4, dadurch gekennzeichnet, dass im fünften Speicher (16) nach jedem der vier Ausgänge des Decodierers (15) ein D-Flipflop (54 bis 57) mit einem Q-Ausgang vorgesehen ist und dass die Takteingänge (C) aller D-Flipflops (54 bis 57) miteinander verbunden sind (Fig. 4).

9. Anordnung nach Anspruch 4, dadurch gekennzeichnet, das im sechsten Speicher (17) nach jedem Ausgang des fünften Speichers (16) ein D-Flipflop (58 bis 61) mit einem Q-Ausgang vorgesehen ist und dass ein fünftes UND-Gatter (62) vorgesehen ist, dessen erster Eingang als Takteingang (28) und dessen zweiter Eingang (24) als Steuersignaleingang dient und dessen Ausgang mit den Takteingängen (c) aller D-Flipflops (58 bis 61) verbunden ist (Fig. 4).

10. Anordnung nach Anspruch 4, dadurch gekennzeichnet, dass in der Verknüpfungsanordnung (21) ODER-Gatter (63 bis 66), deren einer Eingang jeweils mit dem Q-Ausgang eines D-Flipflops (58 bis 61) im sechsten Speicher (17) und deren anderer Eingang jeweils mit dem Steuersignaleingang (24) verbunden sind, sechste UND-Gatter (67 bis 70), deren Eingang mit dem Ausgang jeweils eines der ODER-Gatter (63 bis 66) und deren anderer Eingang jeweils mit dem D-Eingang des vorgeschalteten D-Flipflops (58 bis 61) im sechsten Speicher (17) verbunden ist, und ein weiteres ODER-Gatter (71) vorgesehen ist, dessen Eingänge jeweils mit einem Ausgang der UND-Gatter (67 bis 70) verbunden sind (Fig. 4).

11. Anordnung nach Anspruch 4, dadurch gekennzeichnet, dass in dem Rahmenzähler (23) ein Schieberegister (73), dessen Eingang mit dem Ausgang (22) der Verknüpfungsanordnung (21) verbunden ist und eine der Kanalzahl im Übertragungsweg entsprechende Anzahl von D-Flipflops (84 bis 87) mit Q-Ausgang aufweist, eine Ansteueranordnung (72) für das Schieberegister (73), eine Setzimpulsanordnung (74) für eine Taktversorgung (27) und eine Überwachungsanordnung (75) vorgesehen sind (Fig. 5).

**Claims**

1. An arrangement for the synchronous bit-by-bit demultiplexing of a t.d.m. signal with a frame codeword which occurs in the form of blocks, characterised in that at the input end a cascade circuit (31) is provided which comprises n-1 line elements (32 to 34) which have a signal delay time of one bit length of the t.d.m. signal, that the following transmission path includes a first store (39) with n D-flip-flops (40 to 43), the input of which is connected either to the input (1) of the cascade circuit (31) or to the output (36 to 38) of a respective line element (32 to 34), a second store (7), a third store (8), a channel distributor (9), which is connected to the second store (7) and to the third store (8), and a fourth store (10), that the control path between the second store (7) and the channel distributor (9) includes a decoder (15), a fifth store (16), a sixth store (17) and a coder (18) and that the fifth store (16) and sixth store (17) are followed by a logic-linking arrangement (21) which is itself followed by a frame counter (23) which controls the sixth store (17) and the logic-linking arrangement (21) (Figs 1 and 2).

2. An arrangement as claimed in claim 1, characterised in that line elements (32 to 34) are provided which have a surge impedance of 50 Ω, 60 Ω or 75 Ω.

3. An arrangement as claimed in claim 1 or 2, characterised in that the line elements (32 to 34) comprise cable sections (Fig. 2).

4. An arrangement as claimed in one of the claims 1 to 3 for four outgoing channels for synchronisation to a 12-digit frame codeword in block form, characterised in that in the second store (7), in the first channel four D-flip-flops (1.1 to 1.4) are connected in a cascade arrangement, in the second channel four D-flip-flops (2.1 to 2.4) are connected in a cascade arrangement, in a third channel four D-flip-flops (3.1 to 3.4) are connected in a cascade arrangement and in the fourth channel three D-flip-flops (4.1 to 4.3) are connected in a cascade arrangement, where the Q̄-output is used in the first channel for the third D-flip-flop (1.3) and in the second, third and fourth channel for the second D-flip-flops (2.2, 3.2, 4.2), whereas the Q-output is used in the case of the remaining D-flip-flops (Fig. 3).

5. An arrangement as claimed in claim 4, characterised in that the third store (8) and fourth store (10) include only D-flip-flops (1.5, 2.5, 3.5, 4.5; 1.6, 2.6, 3.6, 4.6) with only a Q-output, and that the clock inputs (C) of all these D-flip-flops are connected to one another (Fig. 3).

6. An arrangement as claimed in claim 4, characterised in that in the channel distributor (9) four multiplexers (46 to 49) are each provided with two inputs (19, 20) for a control codeword (K1, K2), that in the first multiplexer (46) the first input is connected to the Q-output of the D-flip-flop (3.5) in the third channel, the second input is connected to the Q-output of the D-flip-flop (2.5) in the second channel, the third input is connected to the output of the D-flip-flop (1.5) in the first channel and the fourth input is connected to the Q-output of the D-flip-flop (4.4) in the fourth channel of the third store (8), that in the second multiplexer (47) the first input is connected to the Q-output of the D-flip-flop (2.5) in the second channel, the second input is connected to the Q-output of the D-flip-flop (1.5) in the first channel, the third input is connected to the Q-output of the D-flip-flop (4.4) in the fourth channel of the third store (8) and the fourth input is connected to the Q-output of the last D-flip-flop (2.4) in the second channel of the second store (7), that in the third multiplexer (48) the first input is connected to the Q-output of the D-flip-flop (1.5) in the first channel and the second input is connected to the Q-output of the D-flip-flop (4.4) in the fourth channel of the third store (8), and the third input is connected to the Q-output of the last D-flip-flop (3.4) in the third channel and the fourth input is connected to the Q-output of the last D-flip-flop (2.4) in the second channel of the second store (7), and that in the fourth multiplexer (49) the first input is connected to the Q-output of the D-flip-

flop (4.4) in the fourth channel of the third store (8), the second input is connected to the output of the last D-flip-flop (3.4) in the third channel, the third input is connected to the Q-output of the last D-flip-flop (2.4) in the second channel and the fourth input is connected to the Q-output of the last D-flip-flop (1.4) in the first channel of the second store (7) (Fig. 3).

7. An arrangement as claimed in claim 4, characterised in that in the decoder (15) four AND-gates (50 to 53) are provided which have inverting inputs, that the inputs of the first AND-gate (50) are connected to the outputs of the second (1.2), the third (1.3) and the fourth (1.4) D-flip-flop in the first channel and to the outputs of the first (2.1, 3.1, 4.1), the second (2.2, 3.2, 4.2) and the third (2.3, 3.3, 4.3) D-flip-flop in the second, third and fourth channel respectively of the second store (7), where the Q̄-output is used in the third D-flip-flop (1.3) in the first channel and in the second D-flip-flop (3.2) in the third channel, and the Q-output is used in the case of the remaining D-flip-flops, that the inputs of the second AND-gate (51) are connected to the outputs of the second (1.2, 2.2), the third (1.3, 2.3) and the fourth (1.4, 2.4) D-flip-flop of the second and third channel respectively and to the outputs of the first (3.1, 4.1), the second (3.2, 4.2) and the third (3.3, 4.3) D-flip-flop in the third and fourth channel respectively, where the Q-output is used in the second D-flip-flop (4.2) in the fourth channel whereas the Q-output is used in the case of the remaining D-flip-flops, that the inputs of the third AND-gate (52) are connected to the outputs of the second (1.2, 2.2, 3.2), the third (1.3, 2.3, 3.3) and the fourth (1.4, 2.4, 3.4) D-flip-flop in the first, second and third channel respectively and to the outputs of the first (4.1), second (4.2) and third (4.3) D-flip-flop in the fourth channel of the second store (7), where the Q̄-output is used in the third D-flip-flop (1.3, 2.3) in the first and second channels, whereas the Q-output is used in the case of the remaining D-flip-flops, and that the inputs of the fourth AND-gate (53) are connected to the outputs of the first (1.1, 2.1, 3.1, 4.1), the second (1.2, 2.2, 3.2, 4.2) and the third (1.3, 2.3, 3.3, 4.3) D-flip-flop in the first, second, third and fourth channel respectively of the second store (7), where the Q̄-output is required in the third D-flip-flop (1.3) in the first channel and in the second D-flip-flop (4.2) in the fourth channel whereas the Q-output is required in the case of the remaining D-flip-flops (Fig. 4).

8. An arrangement as claimed in claim 4, characterised in that in the fifth store (16), each of the four outputs of the decoder (15) are followed by a D-flip-flop (54 to 57) with a Q-output and that the clock inputs (C) of all the D-flip-flops (54 to 57) are connected to one another (Fig. 4).

9. An arrangement as claimed in claim 4, characterised in that in the sixth store (17), each output of the fifth store (16) is followed by a D-flip-flop (58 to 61) with a Q-output and that a fifth AND-gate (62) is provided, the first input of which serves as clock input (28) and the second input (24) of which serves as control signal input, and the output of which is connected to the clock inputs (c) of all the D-flip-flops (58 to 61) (Fig. 4).

10. An arrangement as claimed in claim 4, characterised in that the logic-linking arrangement (21) includes OR-gates (63 to 66), the first input of each of which is connected to the Q-output of a D-flip-flop (58 to 61) in the sixth store (17) and the other input of each of which is connected to the control signal input (24), sixth AND-gates (67 to 70), the first input of each of which is connected to the output of one of the OR-gates (63 to 66) and the other input of each of which is connected to the D-input of the preceding D-flip-flop (58-61) in the sixth store (17), and a further OR-gate (71), the inputs of each of which are connected to an output of the AND-gates (67 to 70) (Fig. 4).

11. An arrangement as claimed in claim 4, characterised in that the frame counter (23) includes a shift register (73), the input of which is connected to the output (22) of the logic-linking arrangement (21) and which has a number – corresponding to the number of channels in the transmission path – of D-flip-flops (84 to 87) which have a Q-output, a drive arrangement (72) for the shift register (73), a setting pulse arrangement (74) for a clock signal supply unit (27) and a monitoring arrangement (75) (Fig. 5).

**Revendications**

1. Dispositif pour le démultiplexage synchrone et bit par bit d'un signal de multiplexage par répartition dans le temps avec un mot d'identification de trame se présentant sous la forme d'un bloc, caractérisé par le fait qu'il est prévu, du côté entrée, un circuit itératif (31) constitué par n-1 éléments conducteurs (32 à 34) avec une durée de transit des signaux d'une longueur de bit du signal de multiplexage par répartition dans le temps, que dans la voie de transmission qui y fait suite, il est prévu une première mémoire (39) à multivibrateurs bistables du type D (40 à 43) dont les entrées sont reliées soit à l'entrée (1) du circuit itératif (31) soit à la sortie (36 à 38) d'un élément conducteur (32 à 34), que sont prévus une seconde mémoire (7), une troisième mémoire (8), un répartiteur de canaux (9) relié à la seconde mémoire (7) et à la troisième mémoire (8), ainsi qu'une quatrième mémoire (10), qu'il est prévu, dans la voie de commande, entre la seconde mémoire (7) et le répartiteur de canaux (9), un décodeur (15), une cinquième mémoire (16), une sixième mémoire (17) ainsi qu'un décodeur (18), et qu'en aval de la cinquième mémoire (16) et de la sixième mémoire (17), est prévu un dispositif combinatoire (21) à compteur de trames aval (23), qui commande la sixième mémoire (17) et le dispositif combinatoire (21) (figures 1 et 2).

2. Dispositif selon la revendication 1, caractérisé par le fait que sont prévus des éléments conducteurs (32 à 34) ayant une impédance caractéristique de 50 Ω, 60 Ω ou 75 Ω.

3. Dispositif selon la revendication 1 ou 2, caractérisé par le fait que l'on prévoit, en tant qu'élément conducteur (32 à 34) des morceaux de câbles (figure 2).

4. Dispositif selon l'une des revendications 1 à 3 pour quatre canaux de départ pour la synchronisation du mot d'identification de trame se présentant sous la forme d'un bloc et comportant douze chiffres, caractérisé par le fait que sont montés en chaîne dans la seconde mémoire (7), dans le premier canal, quatre multivibrateurs bistables du type D (1.1 à 1.4), dans le second canal, quatre multivibrateurs bistables du type D (2.1 à 2.4), dans le troisième canal, quatre multivibrateurs bistables du type D (3.1 à 3.4), ainsi que dans le quatrième canal, trois multivibrateurs bistables du type D (4.1 à 4.3), étant noté que dans le premier canal on utilise, au niveau du troisième multivibrateur bistable du type D (1.3) et dans le second, dans le troisième et dans le quatrième canal, au niveau du second multivibrateur bistable du type D (2.2, 3.2, 4.2), la sortie $\bar{Q}$, alors que pour les autres multivibrateurs bistables du type D, la sortie Q est branchée (figure 3).

5. Dispositif selon la revendication 4, caractérisé par le fait que dans la troisième mémoire (8) et dans la quatrième mémoire (10) ne sont prévus que des multivibrateurs bistables du type D (1.5, 2.5, 3.5, 4.5; 1.6, 2.6, 3.6, 4.6) avec uniquement une sortie Q, et que les entrées de cadence (C) de tous ces multivibrateurs bistables du type D, sont reliées entre elles (figure 3).

6. Dispositif selon la revendication 4, caractérisé par le fait qu'il est prévu dans le répartiteur de canaux (9), quatre multiplexeurs (46 à 49) ayant chacun deux entrées (19, 20) pour un mot de code de commande (K1, K2), que dans le premier multiplexeur (46), la première entrée est reliée avec la sortie Q du multivibrateur bistable de type D (3.5) dans le troisième canal, la seconde entrée est reliée à la sortie Q du multivibrateur bistable de type D (2.5) dans le second canal, la troisième entrée est reliée à la sortie du multivibrateur bistable de type D (1.5) dans le premier canal et la quatrième entrée est reliée à la sortie Q du multivibrateur bistable de type D (4.4) dans le quatrième canal de la troisième mémoire (8), que dans le second muliplexeur (47), la première entrée est reliée à la sortie Q du multivibrateur bistable de type D (2.5), dans le second canal, la seconde entrée est reliée à la sortie Q du multivibrateur bistable de type D (1.5), dans le premier canal et la troisième entrée est reliée à la sortie Q du multivibrateur bistable de type D (4.4), dans le quatrième canal de la troisième mémoire (8) et la quatrième entrée est reliée à la sortie Q du dernier multivibrateur bistable de type D (2.4) dans le second canal de la seconde mémoire (7), que dans le troisième multiplexeur (48), la première entrée est reliée à la sortie Q du multivibrateur bistable de type D (1.5), dans le premier canal et la seconde entrée est reliée à la sortie Q du multivibrateur bistable de type D (4.4), dans le quatrième canal de la troisième mémoire (8) et la troisième entrée est reliée à la sortie Q du dernier multivibrateur bistable de type D (3.4) dans le troisième canal et la quatrième entrée est reliée à la sortie Q du dernier multivibrateur bistable de type D (2.4), dans le second canal de la seconde mémoire (7) et que dans le quatrième multiplexeur (49), la première entrée est reliée à la sortie Q du multivibrateur bistable de type D (4.4) dans le quatrième canal de la troisième mémoire (8), la seconde entrée est reliée à la sortie du dernier multivibrateur de type D (3.4), dans le troisième canal, la troisième entrée est relié à la sortie Q du dernier multivibrateur bistable de type D (2.4), dans le second canal, et la quatrième entrée est reliée à la sortie Q du dernier multivibrateur bistable de type D (1.4), dans le premier canal de la seconde mémoire (7) (figure 3).

7. Dispositif selon la revendication 4, caractérisé par le fait que dans le décodeur (15) sont prévues quatre portes ET (50 à 53) avec des entrées inverseuses, que les entrées de la première porte ET (50) sont reliées aux sorties du second (1.2), du troisième (1.3) et du quatrième (1.4) multivibrateur bistable du type D, dans le premier canal, et avec les sorties du premier (2.1, 3.1, 4.1) du second (2.2, 3.2, 4.2) et du troisième (2.3, 3.3, 4.3) multivibrateur bistable de type D, dans le second, dans le troisième et dans le quatrième canal de la seconde mémoire (7), étant noté que dans le quatrième multivibrateur bistable de type D (1.3) dans le premier canal, et dans le second multivibrateur bistable de type D (3.2), dans le troisième canal, on utilise la sortie $\bar{Q}$ et dans les autres multivibrateurs bistables de type D, on utilise la sortie Q, que les entrées de la seconde porte ET (51) sont reliées aux sorties du second (1.2, 2.2), du troisième (1.3, 2.3) et du quatrième (1.4, 2.4) du second et du troisième canal, et aux sorties du premier (3.1, 4.1), du second (3.2, 4.2) et du troisième (3.3, 4.3) multivibrateur de type D, dans le troisième et dans le quatrième canal, étant noté que dans le second multivibrateur bistable de type D (4.2), dans le quatrième canal, on utilise la sortie Q et dans les autres multivibrateurs bistables de type D on utilise la sortie Q, que les entrées de la troisième porte ET (52) sont reliées aux sorties du second (1.2, 2.2, 3.2), du troisième (1.3, 2.3, 3.3) et du quatrième (1.4, 2.4, 3.4) multivibrateur bistable de type D, dans le premier, dans le second et dans le troisième canal, et aux sorties du premier (4.1), du second (4.2) et du troisième (4.3) multivibrateur bistable de type D, dans le quatrième canal de la seconde mémoire (7), étant noté que dans le troisième multivibrateur bistable de type D (1.3, 2.3), dans le premier et dans le second canal, la sortie $\bar{Q}$ et dans les autres multivibrateurs bistables de type D la sortie Q est utilisée, et que les entrées de la quatrième porte ET (53) sont reliées aux sorties du premier (1.1, 2.1, 3.1, 4.1), du second (1.2, 2.2, 3.2, 4.2) et du troisième (1.3, 2.3, 3.3, 4.3) multivibrateur bistable de type D, dans le premier, dans le second, dans le troisième et dans le quatrième canal de la seconde mémoire (7), étant noté que dans le troisième multivibrateur bistable de type D (1.3), dans le premier canal, et dans le second multivibrateur bistable de type D (4.2), dans le quatrième canal, la sortie Q̄ et dans les autres multivibrateurs bistables de type D, la sortie Q est mise en œuvre (figure 4).

8. Dispositif selon la revendication 4, caractérisé par le fait que dans la cinquième mémoire (16), et après chacune des quatre sorties du décodeur (15), on prévoit un multivibrateur bistable de type D (54 à 57), avec une sortie Q, et que les entrées de cadence (C) de tous les multivibrateurs bistables de type D (54 à 57) sont reliées entre elles (figure 4).

9. Dispositif selon la revendication 4, caractérisé par le fait que dans la sixième mémoire (17), et après chacune des sorties de la cinquième mémoire (16), il est prévu un multivibrateur bistable de type D (58 à 61) avec une sortie Q, et qu'il est prévu une cinquième porte ET (62) dont la première entrée sert d'entrée de cadence (28) et dont la seconde entrée (24) sert d'entrée des signaux de commande, et dont la sortie est reliée aux entrées de cadence (c) de tous les multivibrateurs bistables de type D (58 à 61) (figure 4).

10. Dispositif selon la revendication 4, caractérisé par le fait que dans le dispositif combinatoire (21) il est prévu des portes OU (63 à 66) dont une entrée est respectivement reliée à la sortie Q d'un multivibrateur bistable de type D (58 à 61) dans la sixième mémoire (17) et dont les autres entrées sont respectivement reliées à l'entrée des signaux de commande (24), qu'il est en outre prévu des sixièmes portes ET (67 à 70) dont les entrées sont respectivement reliées à la sortie d'une porte OU (63 à 66) et dont les autres entrées sont respectivement reliées à l'entrée D du multivibrateur bistable, amont, de type D (58 à 61), dans la sixième mémoire (17), et qu'il est prévu une porte supplémentaire OU (71) dont les entrées sont respectivement reliées à une sortie des portes ET (67 à 70) (figure 4).

11. Dispositif selon la revendication 4, caractérisé par le fait que dans le compteur de trames (23), il est prévu un registre à décalage (73) dont l'entrée est reliée à la sortie (22) du dispositif combinatoire (21), et présentant un nombre de multivibrateurs bistables de type D (84 à 87) à sortie Q, qui correspond au nombre de canaux dans la voie de transmission, ainsi qu'un dispositif d'attaque (72) pour le registre à décalage (73), un dispositif d'impulsions de positionnement (74) pour une alimentation de la cadence (27) et un dispositif de surveillance (75) (figure 5).

FIG 1

FIG 2

FIG 3

0 103 163

FIG 4

FIG 5

FIG 6